Europäisches Patentamt

European Patent Office

Office européen des brevets

(11) Numéro de publication: **0 298 824 B1**

(12) **FASCICULE DE BREVET EUROPEEN**

(45) Date de publication de fascicule du brevet: **26.05.93**

(51) Int. Cl.⁵: **F02P 7/067**, F02P 11/06, F02P 17/00, F02P 5/15, F02D 41/34

(21) Numéro de dépôt: **88401600.7**

(22) Date de dépôt: **24.06.88**

(54) Dispositif de détection d'anomalie de signal dans un système d'allumage–injection électronique.

(30) Priorité: **26.06.87 FR 8709098**

(43) Date de publication de la demande:
**11.01.89 Bulletin 89/02**

(45) Mention de la délivrance du brevet:
**26.05.93 Bulletin 93/21**

(84) Etats contractants désignés:
**DE ES GB IT SE**

(56) Documents cités:
**WO–A–83/04283**
**FR–A– 2 429 520**
**GB–A– 2 065 310**
**US–A– 4 553 427**

**PATENT ABSTRACTS OF JAPAN, vol. 9, no. 179 (M–399)[1902] 24 juillet 1985; & JP–A– 60 47 877 (NIPPON DENSO K.K.) 15–03–1985**

(73) Titulaire: **REGIE NATIONALE DES USINES RENAULT**
**Boîte postale 103 8–10 avenue Emile Zola**
**F–92109 Boulogne–Billancourt(FR)**

(72) Inventeur: **Saint–Léger, Gérard**
**5, Allée Rembrandt**
**F–94800 Villejuif(FR)**
Inventeur: **Korb, Jean–Pierre**
**25, rue du Docteur Zamenhof**
**F–92500 Rueil–Malmaison(FR)**

EP 0 298 824 B1

## Description

L'invention concerne un procédé de détection de l'inversion du signal délivré par le capteur magnétique de position dans un système d'allumage et injection électronique pour moteur à combustion interne.

L'invention s'applique également à un système d'allumage électronique, qui remplit la même fonction que la partie allumage électronique d'un système complet allumage – injection.

Un système d'allumage – injection électronique comprend un circuit d'alimentation d'essence, des moyens d'acquisition des paramètres influençant le calcul du dosage air – essence dont en particulier un volant moteur avec une cible dentée et un capteur de position vilebrequin et de régime moteur, ainsi qu'un calculateur électronique assurant le calcul de l'avance à l'allumage et du temps d'injection et un module de puissance d'allumage portant la bobine d'allumage.

Un tel système est décrit dans GB – A – 2 065 310.

Le capteur magnétique peut délivrer un signal inversé, par rapport au signal réellement existant, pour différentes raisons, par exemple une magnétisation inversée de l'aimant du capteur, un câblage inversé ou une inversion du fil de bobinage;
Cette inversion du signal délivré par le capteur magnétique entraîne des difficultés de démarrage à froid et provoque des phénomènes de cliquetis.

Pour éviter de tels inconvénients, il est important de pouvoir détecter cette inversion de signal : c'est ce que propose l'invention. Pour cela, elle concerne un procédé de détection de l'inversion du signal $S_D$ délivré par un capteur magnétique de position associé à une cible dentée dans un système d'allumage – injection électronique pour moteur à combustion interne, caractérisé en ce qu'il est réalisé par le calculateur d'allumage – injection électronique, en phase de démarrage du moteur dans une plage de régime moteur N limitée par un seuil minimum fixe et un seuil maximum programmé, et en ce qu'il consiste à calculer la somme de la durée $D_n$ de la dent n de la cible mesurée à l'instant $t_n$ et de la durée $D_{n+1}$ de la dent n + 1 mesurée à l'instant $t_{n+1}$ et à la comparer à la durée $D_{n-1}$ de la dent n – 1 à l'instant $t_{n-1}$, ces durées étant mesurées entre deux fronts descendants du signal $S_D$ et comptées entre deux points morts hauts, et à en déduire que le signal $S_D$ est inversé si l'équation $E_2$ :

$$E_2 \qquad D_n > D_{n-1} + D_{n+1}$$

est vérifiée au moins une fois entre deux points morts hauts.

D'autres caractéristiques et avantages de l'invention apparaîtront au cours de la description qui suit, illustrée par les figures suivantes représentant :

- Figure 1 : un système d'allumage – injection électronique réalisant le procédé selon l'invention ;
- Figure 2 : une vue schématisée en coupe transversale d'un capteur magnétique ;
- Figures 3a et 3b : le signal émis par le capteur magnétique en cas de branchement respectivement correct et incorrect ;
- Figure 4 : les différentes étapes du procédé de détection selon l'invention.

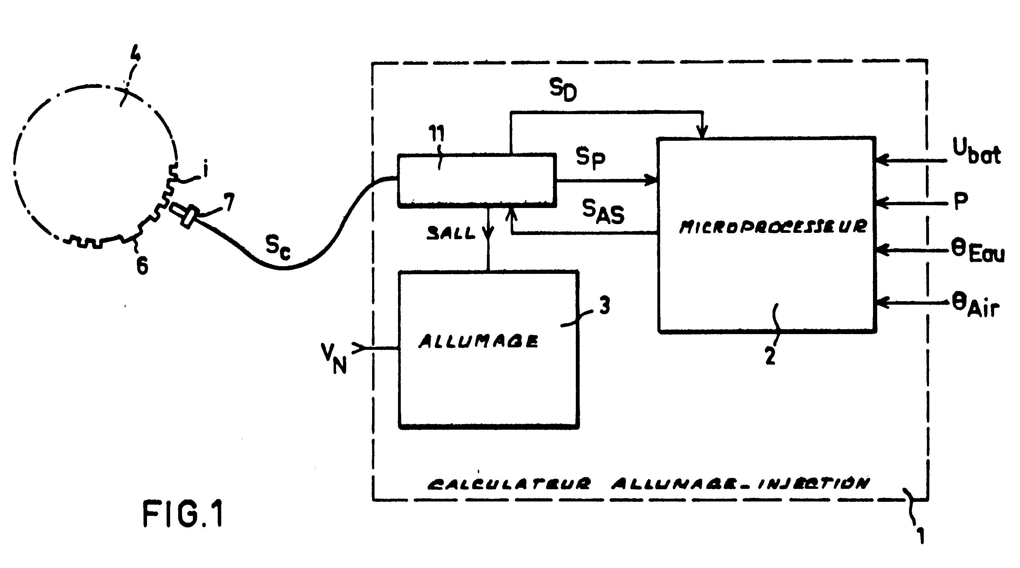

Comme le montre la figure 1, un système d'allumage – injection électronique pour moteur à combustion interne comprend notamment un circuit d'injection d'essence non représenté, un calculateur électronique 1 avec un microprocesseur 2 assurant le calcul de l'avance à l'allumage et du temps d'ouverture des injecteurs, et un module de puissance d'allumage M.P.A. 3.

Pour calculer l'avance à l'allumage et le temps d'injection, le calculateur a besoin de moyens d'acquisition des paramètres, tels que la pression P dans le collecteur d'admission ou la température d'eau du moteur $O_{eau}$, ou la température d'air $O_{air}$, qui influencent le calcul du dosage du mélange air – carburant. Un de ces moyens d'acquisition est un volant moteur 4, placé sur l'arbre moteur au voisinage de la couronne de démarrage et comportant une cible constituée de dents i ménagées à sa périphérie, i étant un entier compris entre 1 et n. La cible comprend un nombre de dents donné, 44 dans un exemple particulier de réalisation, uniformément réparties dont deux fois deux dents manquantes afin de réaliser deux repères absolus 6 diamétralement opposés. Les repères 6 sont placés à 90° des points morts hauts P.M.H. et points morts bas P.M.B.

Un capteur magnétique de position 7 voit défiler les dents. Il est constitué d'un aimant permanent 8 suivi d'un axe polaire 9 en acier doux autour duquel est enroulé un fil de bobinage 10. Le défilement des dents i de la cible provoque une variation de flux dans l'axe polaire qui induit une tension dans le bobinage. Le signal $S_C$ délivré alors par le capteur est ensuite mis en forme par un circuit spécifique 11 pour fournir au microprocesseur 2 du calculateur 1 une image électrique $S_D$ de la cible dans le but de déterminer le régime moteur N et la phase au degré près par rapport au point mort haut ; ce circuit spécifique 11 peut être intégré ou non au microprocesseur 2. Il envoie de plus un signal $S_P$ représentatif des points morts hauts et un signal électrique $S_{ALL}$ au module de puissance d'allumage 3.

Le câblage de raccordement entre le capteur 7 et le circuit spécifique 11 doit être effectué avec précision de telle sorte que, entre deux bornes particulières repérées sur le calculateur, le signal représentatif des repères absolus commence par une alternance positive.

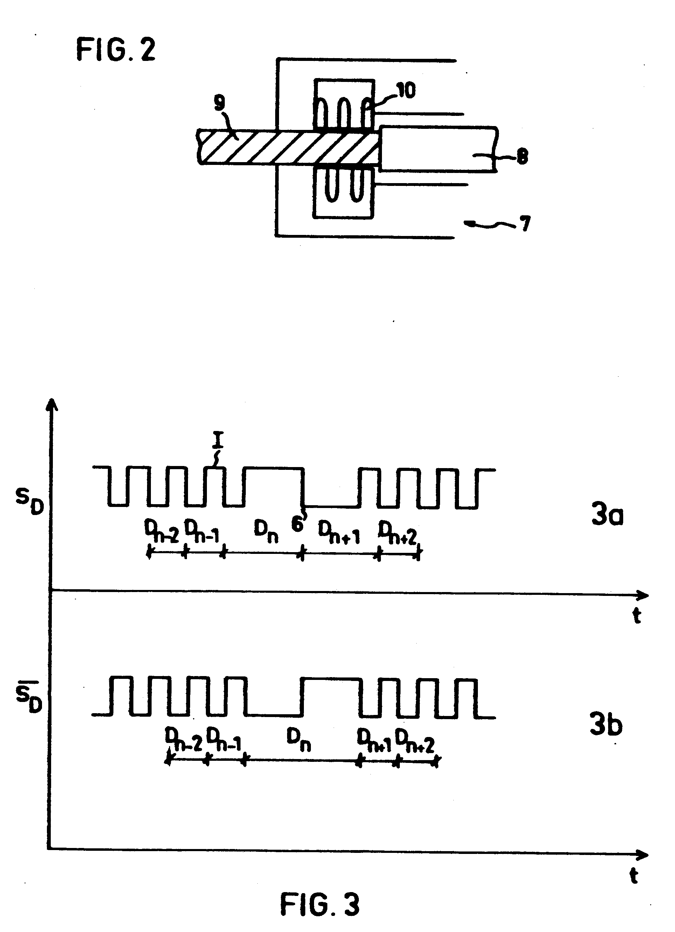

La figure 3a représente le signal $S_D$ de l'image électrique de la cible, chaque impulsion I correspondant à une dent i. L'invention a pour but de détecter une inversion du signal $S_D$ délivré par le capteur magnétique représentée sur la figure 3b où l'on observe que la portion du signal $S_D$ représentant le repère absolu 6 commence par une alternance négative.

Pour cela, le procédé de détection selon l'invention consiste à mesurer la durée $D_i$ entre deux fronts descendants de la $i^{ème}$ dent de la cible comptée entre deux points morts hauts du signal $S_D$ délivré par le capteur magnétique et mis en forme par le circuit spécifique 7, et à vérifier l'équation ($E_1$) suivante, quelle que soit la dent de la cible :

($E_1$)     $D_i < D_{i-1} + D_{i+1}$

Si entre deux points morts hauts, on trouve une fois l'équation ($E_2$) suivante :

($E_2$)     $D_i > D_{i-1} + D_{i+1}$

on peut en déduire que le signal $S_D$ est inversé.

Un calculateur d'allumage-injection effectue obligatoirement à chaque point mort haut un programme hiérarchisé comportant une première partie prioritaire au cours de laquelle il réalise impérativement des tâches prioritaires entre deux points morts hauts comme le calcul de l'angle d'avance à l'allumage, le temps d'injection ou le régime moteur au ralenti, et une seconde partie, concernant par exemple des calculs de paramètres évoluant lentement dans le temps comme la température d'eau du moteur. Cette seconde partie du programme n'est pas toujours entièrement effectuée, en fonction du régime moteur et peut s'étaler sur plusieurs tours moteur.

Selon l'invention, le procédé de détection n'a lieu qu'en séquence démarreur alors que le régime moteur est faible, pour ne pas perturber le déroulement du programme d'injection. Dans ce cas, on n'autorise pas, à chaque début d'interruption par un point mort haut, les interruptions du programme prioritaire par les impulsions I du signal $S_D$. Ces interruptions par le signal $S_D$ ne seront autorisées à la fin de la partie prioritaire du programme d'allumage-injection que sous une condition supplémentaire : le nombre d'interruptions par le signal $S_D$ déjà prises en compte doit être inférieur à une valeur donnée (256 par exemple), ce qui

permet d'arrêter le test dès qu'on est sûr d'avoir déterminé le sens du capteur (quand ces conditions sont satisfaites, on initialise la séquence de détection du sens du capteur magnétique).

Selon une autre caractéristique essentielle de l'invention, le procédé de détection selon l'invention est validé sur les fronts descendants du signal $S_D$ provenant du capteur magnétique pour éviter les coïncidences d'interruptions entre le signal $S_D$ et le signal $S_P$ représentatif des points morts hauts. Ce choix permet également de ne pas utiliser un compteur de dents pour n'effectuer le test qu'au passage de la dent manquante devant le capteur, mais de le faire en permanence pour toutes les dents. Un avantage supplémentaire de ce choix de fronts descendants réside dans le fait que le procédé peut être effectué à bas régime sans gérer les dépassements — ou overflow en vocable anglo-saxon — du compteur d'impulsions d'horloge du microprocesseur, puisque la durée maximale mesurée correspondant à la dent manquante n'est que deux fois celle $D_i$ d'une dent normale alors que si le test était effectué à partir des fronts montants, la durée maximale serait égale à $3D_i$ — (figure 3a).

Sur cette figure 3a, on constate bien qu'au niveau de la dent manquante

$D_n = D_{n+1} = 2D_{n-1} = 2D_{n+2}$

si le capteur est branché correctement, de sorte que l'équation $E_1$ :

($E_1$)     $D_n < D_{n-1} + D_{n+1}$

est vérifiée quelle que soit la dent de la cible considérée.

Par contre, quand le capteur magnétique est mal branché, cette équation n'est plus vraie pour les dents manquantes, pour lesquelles on a (figure 3b) :

$D_n > D_{n-1} + D_{n+1}$

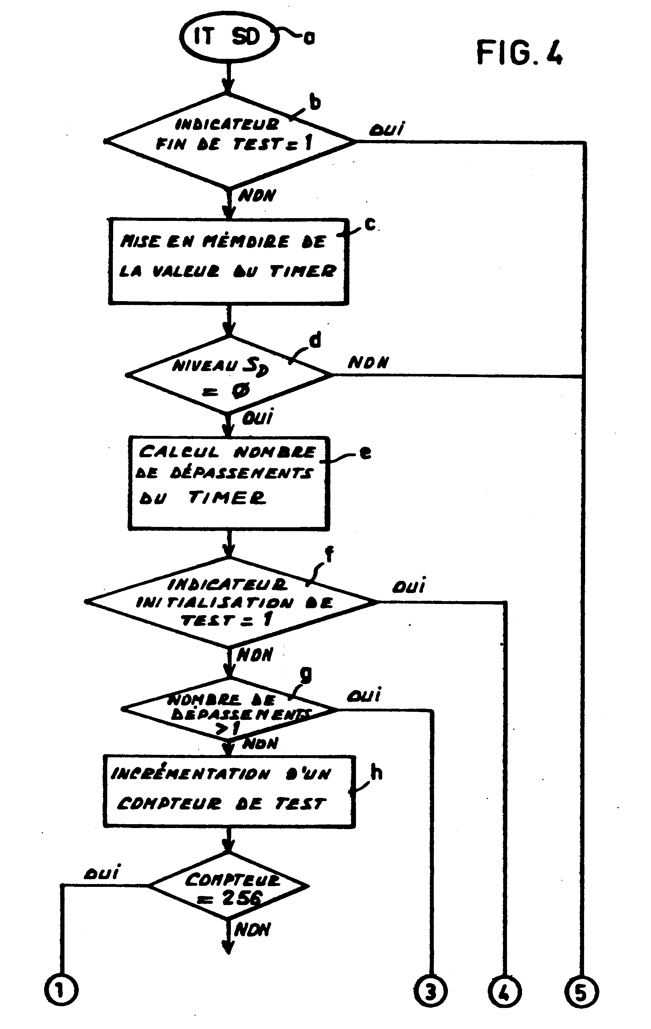

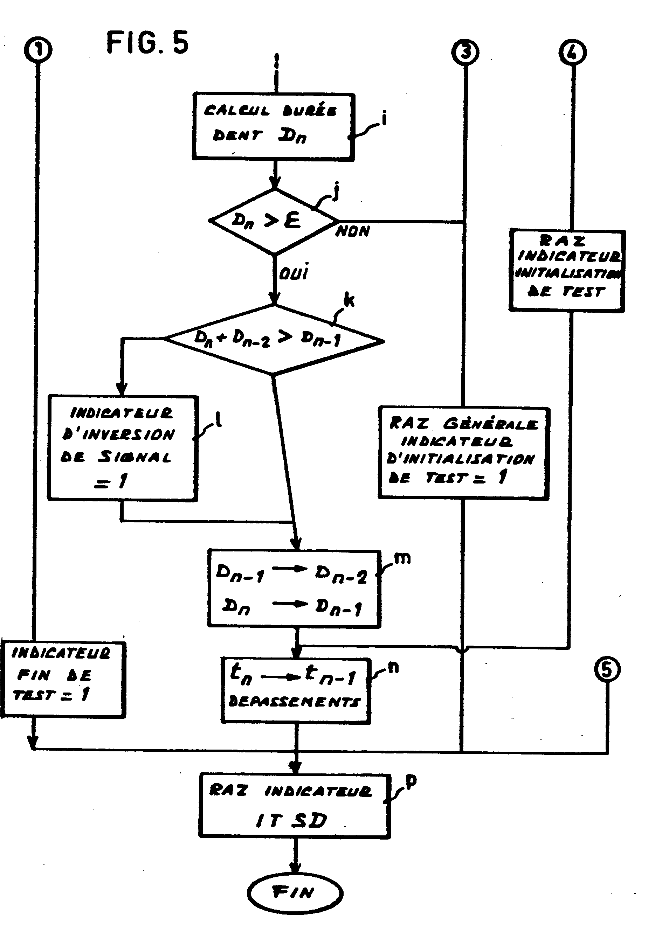

Sur la figure 4 est représenté l'enchaînement des différentes étapes du procédé de détection selon l'invention :

**Etape a** : une interruption IT SD du programme prioritaire d'allumage-injection par une impulsion (I) du signal $S_D$ provenant du capteur magnétique est autorisée.

**Etape b** : dans ce sous-programme réalisé pour la détection de l'inversion du capteur magnétique, si l'indicateur de fin de test est à la valeur 1, la détection n'est plus à faire mais si il est à zéro, la détection va être faite.

**Etape c :** mise en mémoire dans une mémoire vive du type RAM de la valeur du compteur d'impulsions d'horloge à l'instant du front descendant de l'interruption prise en compte.

**Etape d :** vérification de la prise en compte du front descendant de l'impulsion et non d'un front montant, par constatation du niveau de l'impulsion après le front.

**Etape e :** calcul du nombre de dépassements du compteur d'impulsions d'horloge du microprocesseur entre cette impulsion et l'impulsion précédente.

**Etape f :** le test de détection n'est effectué qu'après la prise en compte d'au moins deux impulsion I du signal $S_D$ et dans ce cas on met à zéro un indicateur d'initialisation de test ; sinon il est positionné à 1.

**Etape g :** le nombre de dépassements du compteur d'impulsions d'horloge entre deux impulsions doit être inférieur à deux. Sinon cela signifie que le régime moteur est trop bas, inférieur à un seuil déterminé (84 tours/minute par exemple) et dans ce cas le test n'est pas fait, l'indicateur d'initialisation de test est positionné à 1 et les calculs de durée de dents et le compteur de test sont remis à zéro.

**Etape h :** incrémentation d'un compteur de test et vérification qu'un nombre maximum choisi (256 par exemple) de tests n'est pas encore atteint. Si n = 256, indicateur de fin de test à 1.

**Etape i :** calcul de la durée $D_n$ de la dent n à partir des valeurs du compteur d'impulsions d'horloge lors des interruptions $t_n$ et $t_{n-1}$ mémorisées en RAM et en tenant compte du nombre de dépassements du compteur d'impulsions d'horloge, 0 ou 1.

**Etape j :** si la durée $D_n$ de la nième dent $D_n$ est inférieure à un seuil donné, c'est en raison de parasites et on annule le test en cours.

**Etape k :** on calcule la somme des durées $D_{n+1}$ et $D_{n-1}$ des dents n + 1 et n − 1 et on la compare à la durée Dn de la dent n.

**Etape l :** on positionne à 1 un indicateur d'inversion du capteur magnétique si :

$$D_{n+1} + D_{n-1} < D_n$$

**Etape m :** quel que soit le résultat de la comparaison pratiquée à l'étape k, on décale les mémoires RAM afin de transférer la durée Dn + 1 de la dent n + 1 dans la case de la dent n et la durée Dn de la dent n dans la case de la dent n − 1.

**Etape n :** décalage des mémoires RAM afin de transférer le contenu du compteur d'impulsions d'horloge présent à l'interruption $t_n$ dans la case de la valeur précédente et le nombre de dépassements présents dans la case de la valeur précédente.

**Etape o :** remise à zéro de l'indicateur d'interruption ITSD par une impulsion du signal SD.

## Revendications

1. Procédé de détection de l'inversion du signal $(S_D)$ délivré par un capteur magnétique (7) de position associé à une cible dentée dans un système d'allumage – injection électronique pour moteur à combustion interne, ladite cible dentée comportant un nombre de dents donné uniformément réparties dont au moins une fois deux dents manquantes afin de réaliser un repère absolu (6), caractérisé en ce qu'il est réalisé par le calculateur d'allumage – injection électronique, en phase de démarrage du moteur dans une plage de régime moteur (N) limitée par un seuil minimum fixe et un seuil maximum programmé, et en ce qu'il consiste à calculer la somme de la durée $D_{n-1}$ de la dent n − 1 de la cible et de la durée $D_{n+1}$ de la dent n + 1 et à la comparer à la durée $D_n$ de la dent n, la durée de défilement desdites dents consécutives (n − 1, n, n + 1) étant définie par le temps écoulé entre deux fronts descendants successifs du signal $(S_D)$ et comptées entre deux points morts hauts, et à en déduire que le signal $(S_D)$ est inversé si l'équation $E_2$ :

$$E_2 \qquad D_n > D_n - 1 + D_n + 1$$

est vérifiée au moins une fois entre deux points morts hauts.

**2.** Procédé de détection selon la revendication 1, caractérisé en ce que le calculateur exécute les étapes suivantes lorsqu'une interruption (IT SD) du programme prioritaire d'allumage – injection par une impulsion (I) du signal ($S_D$) provenant du capteur magnétique est autorisée (étape a)

b) détection faite si un indicateur de fin de test est à zéro ;

c) mise en mémoire vive de la valeur du compteur d'impulsions d'horloge à l'instant du front descendant de l'interruption prise en compte ;

d) vérification de la prise en compte du front descendant de l'impulsion par constatation du niveau de l'impulsion après le front ;

(e) calcul du nombre de dépassements du compteur d'impulsions d'horloge du micro – processeur entre cette impulsion et l'im – pulsion précédente ;

f) détection effectuée qu'après la prise en compte d'au moins deux impulsions (I) du signal ($S_D$) et mise à zéro d'un indicateur d'initialisation de test ;

g) détection effectuée si le nombre de dé – passements du compteur d'impulsions d'horloge du calculateur entre deux impul – sions est inférieur à 2 ;

h) incrémentation d'un compteur de test et vérification qu'un nombre maximum choisi (256 par exemple) de tests n'est pas encore atteint ;

i) calcul de la durée $D_n$ de la dent n à partir des valeurs du compteur d'impulsions d'horloge lors des interruptions $t_n$ et $t_{n-1}$ mémorisées et en tenant compte du nom – bre de dépassements du compteur d'im – pulsions d'horloge, 0 ou 1 ;

j) annulation de la détection en cours si la durée $D_n$ de la $n^{ième}$ dent est inférieure à un seuil ;

k) on calcule la somme des durées $D_{n+1}$ et $D_{n-1}$ des dents n + 1 et n − 1 et on la compare à la durée $D_n$ de la dent n ;

l) on positionne à 1 un indicateur d'inversion du capteur magnétique si

$$D_{n+1} + D_{n-1} < D_n$$

m) décalage des durées de dents ($D_n$) des mémoires vives ; et

n) décalage des mémoires vives contenant les valeurs du compteur d'impulsions d'horloge aux interruptions ($t_n$).

**Claims**

**1.** A method of detecting the inversion of the signal ($S_D$) supplied by a magnetic position sensor (7) associated with a toothed target in an electronic ignition – injection system for an internal combustion engine, the toothed target comprising a given number of uniformly dis – tributed teeth, at least one times two teeth of which are missing so as to provide an absolute reference (6), characterized in that it is carried out by the electronic ignition – injection com – puter, during the starting phase of the engine in an engine speed range (N) limited by a fixed minimum threshold and a programmed maxi – mum threshold, and in that it consists in cal – culating the sum of the duration $D_{n-1}$ of the tooth n − 1 of the target and the duration $D_{n+1}$ of the tooth n + 1 and in comparing it with the duration $D_n$ of the tooth n, the passage dura – tion of these consecutive teeth (n − 1, n, n + 1) being defined by the time lapse between two successive descending fronts of the signal ($S_D$) and counted between two top dead centres, and in deducing from this that the signal ($S_D$) is inverted if the equation $E_2$:

$$E_2 \qquad D_n > D_n - 1 + D_n + 1$$

is verified at least once between two top dead centres.

**2.** A detection method as claimed in claim 1, characterized in that the computer performs the following steps when an interruption (IT SD) of the priority ignition – injection program by a pulse (I) of the signal ($S_D$) from the magnetic sensor is authorized (step a):

b. detection carried out if an end – of – test indicator is at zero;

c. read – write memory storage of the value of the clock pulse counter at the time of the descending front of the interruption taken into account;

d. verification that the descending front of the pulse has been taken into account by monitoring the level of the pulse after the front;

e. calculation of the number of occasions on which the clock pulse counter of the microprocessor has been exceeded be – tween this pulse and the preceding pulse;

f. detection carried out only after at least two pulses (I) of the signal ($S_D$) have been taken into account and a test initialization indicator has been zero – set;

g. detection carried out if the clock pulse counter of the computer has been exceeded less than 2 times between two pulses;

h. incrementation of a test counter and checking that a selected maximum number of tests (256 for instance) has not yet been reached;

i. calculation of the duration $D_n$ of the tooth n from the values of the clock pulse counter during the stored interruptions $t_n$ and $t_{n-1}$ taking into account the number of times the clock pulse counter has been exceeded, 0 or 1;

j. cancellation of the detection in progress if the duration $D_n$ of the nth tooth is lower than a threshold;

k. calculation of the sum of the durations $D_{n+1}$ and $D_{n-1}$ of the teeth n + 1 and n − 1 and comparison of this with the duration $D_n$ of the tooth n;

l. an inversion indicator of the magnetic sensor is positioned at 1 if $D_{n+1}$ + $D_{n-1}$ < $D_n$;

m. shift of the durations of teeth ($D_n$) of the read − write memories;

n. shift of the read − write memories containing the values of the clock pulse counter at the interruptions ($t_n$).

**Patentansprüche**

1. Verfahren zur Erkennung der Vorzeichenumkehr des Signals ($S_D$), das von einem magnetischen Positionsfühler (7) abgegeben wird, der einer gezahnten Zielscheibe zugeordnet ist, in einem elektronischen Einspritz − und Zündsystem eines Verbrennungsmotors, wobei die gezahnte Zielscheibe eine vorgegebene Anzahl Zähne aufweist, die gleichförmig entlang des Umfangs verteilt sind und wobei wenigstens an einer Stelle zwei Zähne fehlen, um so eine Absolutmarkierung (6) zu bilden, dadurch gekennzeichnet, daß es durch den elektronischen Zünd − Einspritz − Rechner verwirklicht wird, während der Startphase des Motors in einem Motordrehzahlbereich (N), der durch einen feststehenden unteren Schwellwert und einen programmierten oberen Schwellwert begrenzt wird, und daß es darin besteht, die Summe der Dauern $D_{n-1}$ des Zahnes n − 1 der Zielscheibe und der Dauer $D_{n+1}$ des Zahnes n + 1 zu berechnen und mit der Dauer $D_n$ des Zahnes n zu vergleichen, wobei die Vorbeilaufdauer der aufeinanderfolgenden Zähne (n − 1, n, n + 1) durch die Zeit definiert ist, die zwischen zwei aufeinanderfolgenden Abstiegsflanken des Signals ($S_D$) verstreicht und die zwischen zwei oberen Totpunkten gemessen werden, um daraus abzuleiten, daß das Signal ($S_D$) ein entgegengesetztes Vorzeichen aufweist, wenn

die Gleichung $E_2$:

$$E_2 \qquad D_n > D_{n-1} + D_{n+1}$$

wenigstens einmal zwischen zwei oberen Totpunkten erfüllt ist.

2. Verfahren zur Erkennung nach Anspruch 1, dadurch gekennzeichnet, daß der Rechner die folgenden Schritte durchführt, sofern eine Unterbrechung (ITSD) des vorrangigen Zündeinspritzprogramms ermöglicht wird durch einen Impuls (I) des vom magnetischen Fühler Stammenden Signals ($S_D$) (Schritt a),

b) Durchführung der Erkennung, wenn eine Anzeige für das Testende auf 0 steht;

c) Einspeichern in einen Zugriffsspeicher des Wertes des Zeit − Impuls − Zählers zum Zeitpunkt der berücksichtigten Abstiegsflanke der Unterbrechung;

d) Überprüfung der berücksichtigten Abstiegsflanke des Impulses durch Überprüfung des Impulsniveaus nach der Flanke;

e) Berechnung der Anzahl der Vorbeiläufe des Zeit − Impuls − Zählers des Mikroprozessors zwischen diesem Impuls und dem vorhergehenden Impuls;

f) Durchführung der Erkennung nach Berücksichtigung wenigstens zweier Impulse (I) des Signals ($S_D$) und Stellen auf 0 einer Einleitungsanzeige des Tests;

g) Durchführung der Erkennung, wenn die Anzahl der Vorbeiläufe des Zeit − Impuls − Zählers des Rechners zwischen zwei Impulsen kleiner als 2 ist;

h) Aufzählung in einem Testzähler und Überprüfung, ob eine maximale gewählte Anzahl (beispielsweise 256) an Tests erreicht wurde;

i) Berechnung der Dauer $D_n$ des Zahnes n ausgehend von den Werten des Zeit − Impuls − Zählers während der gespeicherten Unterbrechungen $t_n$ und $t_{n-1}$ und Berücksichtigung der Anzahl der Vorbeiläufe des Zeit − Impuls − Zählers (0 oder 1);

j) Annulieren der laufenden Erkennung, wenn die Dauer $D_n$ des n − ten Zahnes kleiner als ein Schwellwert ist;

k) Berechnung der Summe der Dauer $D_{n+1}$ und $D_{n-1}$ der Zähne n + 1 und n − 1 und Vergleich mit der Dauer $D_n$ des Zahnes n;

l) Setzen auf 1 einer Vorzeichenanzeige für den magnetischen Fühler wenn

$$D_{n+1} + D_{n-1} < D_n$$

ist;

m) Verschieben der Dauern ($D_n$) der Zähne im Zugriffsspeicher; und

n) Verschieben der Zugriffsspeicher, in denen die Werte der Zeit-Impuls-Zähler während der Unterbrechungen ($t_n$) enthalten sind.

FIG.1

EP 0 298 824 B1

FIG. 2

FIG. 3

FIG. 4

IT SD — a

INDICATEUR FIN DE TEST = 1 — b
OUI
NON

MISE EN MÉMOIRE DE LA VALEUR DU TIMER — c

NIVEAU $S_D$ = Ø — d
NON
OUI

CALCUL NOMBRE DE DÉPASSEMENTS DU TIMER — e

INDICATEUR INITIALISATION DE TEST = 1 — f
OUI
NON

NOMBRE DE DÉPASSEMENTS > 1 — g
OUI
NON

INCRÉMENTATION D'UN COMPTEUR DE TEST — h

COMPTEUR = 256
OUI
NON

① ③ ④ ⑤

# FIG. 5